# EUROPEAN PATENT SPECIFICATION

(11) **EP 1 437 370 B1**
(45) Date of publication and mention of the grant of the patent: **20.09.2006**
(21) Application number: 04000160.4
(22) Date of filing: 07.01.2004
(51) Int. Cl.: C08G 18/00, C08L 75/04, C08K 5/34, C08K 5/16, C08K 5/18, C09K 3/10

(54) **Sealing material for air-conditioner**
Dichtmaterial für eine Klimaanlage
Matériau d'étanchéité pour un conditionneur d'air

(30) Priority: 08.01.2003 JP 2003002624
(43) Date of publication of application: 14.07.2004
(73) Proprietor: INOAC CORPORATION, Nagoya-shi Aichi-ken (JP); DENSO CORPORATION, Kariya-shi, Aichi-ken (JP)
(72) Inventor: Takano, Motohiro, Anjo-shi Aichi (JP); Nishimura, Yoshinobu, Anjo-shi Aichi (JP); Yano, Tadashi, Anjo-shi Aichi (JP); Uchiyama, Kazuhisa, Kariya-shi Aichi (JP); Ito, Masahiro, Kariya-shi Aichi (JP)
(74) Representative: HOFFMANN EITLE

(56) References cited:
- EP-A- 0 302 400
- EP-A- 0 795 583
- US-A- 4 242 463

## Description

### FIELD OF THE INVENTION

The present invention relates to a sealing material for air-conditioners. More particularly, the invention relates to a sealing material for air-conditioners which is constituted of a polyurethane foam and is suitable for use in vehicles and the like, especially in parts to be exposed to high temperatures and high humidities, such as air blowoff openings. The sealing material for air-conditioners has been reduced in the amount of volatile organic compounds emitted therefrom during use, by producing the foam from material components which are high-molecular substances each having a number-average molecular weight not lower than a certain level.

### BACKGROUND OF THE INVENTION

In general, polyurethane foams can be made to have compositions having various properties, e.g., excellent lightweight properties, cushioning properties, chemical resistance, and water resistance, by changing the kinds and proportions of the polyol and isocyanate to be used as material components therefor. Due to such excellent properties and high general-purpose properties, polyurethane foams have been advantageously used as the materials constituting sealing materials for vehicles, such as duct doors and air seals. The duct doors and air seals are used, for example, in air-conditioner doors disposed in various air ducts or the like in vehicles, etc. The duct doors serve as passage selector valves in ducts for introducing air having appropriate values of temperature, humidity, etc. into the seat compartment of a vehicle for air conditioning or ventilation. The air seals serve to seal the duct doors.

The duct doors and air seals described above are always exposed to the air flowing through the air ducts. This air contains water at the time of, e.g., outside air introduction and further contains ozone emitted by various factors, such as various heating sources, etc. Because of this, the polyurethane foams constituting the duct doors, air seals, and the like are required to have resistance to the water and ozone.

The polyurethane foams constituting the duct doors and air seals described above have different features according to the kinds of the polyols used as one of the main material components therefor. Namely, polyurethane foams produced using a polyester polyol (hereinafter referred to as ester foams) not only have high pliability and are excellent in compression set and durability but also has excellent ozone resistance. However, the ester foams have a problem that the foams become brittle because the ester bonds are hydrolyzed, that is, the foams are unsuitable for use in the presence of water. In contrast, polyurethane foams produced using a polyether polyol (hereinafter referred to as ether foams) have hydrolytic resistance at least three times the hydrolytic resistance of the ester foams. However, the ether foams are more susceptible to ozone deterioration than the ester foams, and have the following problem. When the foams are used as, e.g., the air seals described above, cell walls are gradually destroyed when the foams are exposed to the ozone in the surrounding atmosphere overlong. As a result, the air permeability of the foams increases considerably and the foams come not to function as sealing materials.

Although the duct doors and air seals are exposed to such severe environments, they are frequently required to have a long-term durability of, e.g., 10 years in terms of guarantee period. Because of this, the hydrolytic resistance in the case of using ester foams (hereinafter referred to as wet-heat aging resistance) and the ozone deterioration resistance in the case of using ether foams are regarded as serious problems. For eliminating such problems, the applicants proposed "a polyurethane foam for sealing materials and an air-conditioner door comprising the same" in JP-A-9-296160 (The term "JP-A" as used herein means "unexamined published Japanese patent application") and the corresponding EP-A-0 795 583. This polyurethane foam is one produced from material components including a polyol ingredient comprising a specific polyether-polyester polyol optionally in combination with an ordinary polyester polyol or polyether polyol and further including an antiozonant, e.g., a specific amine compound. Due to this constitution, the foam for sealing materials and the air-conditioner door comprising this foam for sealing materials are capable of eliminating the problems concerning water and ozone described above.

However, besides the problems concerning water and ozone described above, it has been known that ingredients which are causative of an offensive odor or fogging glass surfaces or the like, i.e., volatile organic compounds, volatilize from ordinary sealing materials for air-conditioners with the lapse of time. It has been pointed out that in the case where the polyurethane foams are used as interior materials in vehicles such as motor vehicles, such volatile organic compounds adhere to the glass surfaces in the seat compartment as stated above to impair visibility.

US 4,242,463 relates to integral skin polyurethane foams prepared by reacting a composition comprising a polyol, an aliphatic or cyclo-aliphatic isocyanate, a crosslinker, and a specific catalyst. In exemplary mixtures, IRGANOX 1010 is present as an antioxidant in an amount of 1 part by weight per 100 parts by weight of the polyol.

EP-A-0 302 400 is concerned with sealant products and pneumatic tires containing the same. The sealants of some of the working examples contain natural rubber, and, as a stabilizer, a mixture containing specific antiozonants and antioxidants.

### SUMMARY OF THE INVENTION

The invention has been achieved in view of the drawbacks of the above-described sealing materials for air-conditioners according to related-art techniques, and in order to favorably eliminate these drawbacks. An object of the invention is to provide a sealing material for air-conditioners which can have improved ozone deterioration resistance and improved wet-heat aging resistance and be reduced in the amount of volatile organic compounds (VOCs) emitted therefrom during use, etc., by incorporating an appropriate amount of a specific antiozonant, e.g., an amine compound additive, into material components for the polyurethane foam to be used as the sealing material for air-conditioners and by selecting and using high-molecular compounds each having a number-average molecular weight not lower than a certain level.

In order to overcome the problems described above and to accomplish the desired object, the invention provides a sealing material for air-conditioners which comprises a polyurethane foam produced from material components comprising at least one polyol, at least one isocyanate, from 1 to 25 parts by weight of an antiozonant per 100 parts by weight of the polyol, a catalyst, and an antioxidant,
the antioxidant and an antioxidant used in synthesizing the polyol each having a number-average molecular weight of from 400 to 5000, and being selected from hindered phenol compounds, phosphorus compound antioxidants, sulphur compound antioxidants and hindered amine antioxidants, and the antiozonant having a number-average molecular weight of from 280 to 5000 and being selected from the group consisting of aromatic secondary amine compounds, amine-ketone compounds and peroxide decomposers,
wherein the amount of volatile organic compounds emitted from the polyurethane foam having been thus reduced.

### DETAILED DESCRIPTION OF THE INVENTION

The sealing material for air-conditioners according to the invention will be explained below by reference to preferred embodiments thereof. The present inventors have found that the amount of volatile organic compounds (hereinafter referred to as VOCs) emitted can be reduced by selectively using, as additives in ordinary use, an antioxidant and an antiozonant which each are a high-molecular compound having a number-average molecular weight as defined in Claim 1, in order to obtain the sealing material for air-conditioners (hereinafter referred to simply as sealing material) which has satisfactory properties. In the invention, values of VOC content are determined and evaluated by the VOC measurement method as provided for in German Automobile Industry Association VDA278. Specifically, the values are determined and evaluated in ppm unit. Ozone deterioration resistance is evaluated based on air permeability determined after exposure to ozone for a given period. Wet-heat aging resistance is evaluated based on the tensile strength retention determined after exposure to a wet-heat atmosphere.

In the invention, the VOC content has preferably been regulated to 300 ppm or lower in terms of the VOC content value determined by the VOC measurement method as provided for in German Automobile Industry Association VDA278. This value of VOC content is attained basically by using given substances as an antioxidant and antiozonant.

The sealing material according to a preferred embodiment of the invention is produced by using an aromatic secondary amine compound as an antiozonant in combination with a polyol and isocyanate as the main material components and by selectively using high-molecular compounds each having a number-average molecular weight as defined in Claim 1 as an antioxidant and the antiozonant. One or more additives selected from chain extenders, flame retardants, crosslinking agents, blowing agents, foam stabilizers, and the like are used according to need.

As the polyol can be used, without particular limitations, one for ordinary use in producing flexible polyurethane foams or rigid polyurethane foams. Preferred are compounds which have two or more hydroxyl groups and are generally called polyols. Examples thereof include polyether polyols, polyester polyols, polycarbonate polyols, polycaprolactone polyols, ethylene glycol, glycerol, and mixtures of two or more thereof. Such polyols can be used in combination with a compound having active hydrogen in place of hydroxyl groups, such as, e.g., a carboxylic acid or amine. Those polyols may be used either alone or in combination of two or more thereof.

Especially in the case where a polyether polyol is used as the polyol, an antioxidant was used in synthesizing the polyether polyol besides being used in producing the sealing material according to the invention. This antioxidant used in synthesis (hereinafter referred to as synthesis antioxidant) is one of the major causes which heighten the value of VOC content. Consequently, with respect to this synthesis antioxidant to be used in polyether polyol synthesis also, a high-molecular antioxidant having a number-average molecular weight as defined in Claim 1 is selectively used as in the case of the antioxidant to be used in producing the sealing material.

In the case where a polyester polyol is used as the polyol, no synthesis antioxidant which heightens the value of VOC content is used in synthesizing the polyester polyol because this polyol contains in the molecule no ether groups which are susceptible to oxidation. However, in producing a sealing material from the polyester polyol and an isocyanate, an antioxidant is used, as in the case of the polyether polyol, for the purpose of preventing the phenomenon in which partial yellowing occurs due to the heat of an exothermic reaction, i.e., the so-called scorching, in the polyurethane foam production. It is hence necessary to selectively use as the antioxidant a high-molecular antioxidant having a number-average molecular weight as defined in Claim 1 for enabling the polyurethane foam as a whole to have a reduced value of VOC content.

When the polyester polyol is to be used, a high-molecular compound having a number-average molecular weight as defined in Claim 1 is selected, like the antioxidant, as a polymerization initiator to be used in synthesizing the polyester polyol. Specifically, it is preferred to employ a compound having a number-average molecular weight of from 400 to 1,000, such as, e.g., a isomer acid. In general, an inexpensive substance such as lipic acid is used for the synthesis of ordinary polyester polyols from the standpoints of synthesis cost, etc. In this case, however, the polyol synthesis results in a residue which remains uncondensed to the target number-average molecular weight and this residue is decomposed to cyclic esters, which are causative of VOC emission. Consequently, it is undesirable to use such polymerization initiators.

It is also preferred that the polyol to be used as a main material component for the sealing material according to the invention be a combination of a polyester polyol, which gives foams having excellent ozone deterioration resistance, and a polyether polyol, which gives foams having excellent wet-heat aging resistance. This is because this combination is effective in enabling the sealing material to combine ozone deterioration resistance and wet-heat aging resistance on a high level. In this case, the proportions of the two polyols are not particularly limited. However, the amount of the polyether polyol may be regulated to 60 parts by weight or larger, preferably 70 parts by weight or larger, per 100 parts by weight of all polyols. In case where the amount of the polyether polyol is smaller than 60 parts by weight, wet-heat aging resistance becomes poor.

A polyether-polyester polyol, which is intermediate in properties between the polyether polyol and the polyester polyol, or the like may be used. Such a polyol has ester groups and ether groups in the molecule, and gives a foam having higher ozone deterioration resistance than ether foams. This foam further has wet-heat aging resistance improved to almost the same level as that of ether foams. In the case where properties of a polyether polyol and properties of a polyester polyol are utilized in combination as described above, an antiozonant such as, e.g., a secondary amine compound is used in the invention to secure ozone deterioration resistance. As a result, a sealing material combining excellent ozone deterioration resistance and excellent wet-heat aging resistance can be obtained.

In the case where a combination of the polyether-polyester polyol described above and a polyester polyol is used as the polyol, the amount of the polyester polyol may be regulated to from 15 to 60 parts by weight, preferably from 20 to 50 parts by weight, per 100 parts by weight of all polyols. When the polyether-polyester polyol is used in combination with a polyether polyol, the amount of this polyether polyol may be regulated to from 50 to 80 parts by weight, preferably from 60 to 75 parts by weight, per 100 parts by weight of all polyols. Furthermore, when those three kinds of polyols are used in combination, the amounts of the polyester polyol, polyether-polyester polyol, and polyether polyol may be regulated to from 15 to 30 parts by weight, from 25 to 45 parts by weight, and from 30 to 50 parts by weight, respectively, per 100 parts by weight of all polyols.

As the isocyanate can be used, without particular limitations, one for general use in producing flexible polyurethane foams or rigid polyurethane foams. Various isocyanate compounds in general use which are aromatic, aliphatic, and alicyclic compounds having two or more isocyanate groups can be used. Furthermore, modified isocyanates obtained by modifying isocyanate compounds can be used. A combination of two or more of such isocyanates may also be used. Specific examples thereof include aromatic isocyanates such as diphenylmethane diisocyanate (MDI), crude diphenylmethane diisocyanate, tolylene diisocyanate, naphthalene diisocyanate (NDI), p-phenylene diisocyanate (PPDI), xylene diisocyanate (XDI), and tolidine diisocyanate (TODI); alicyclic isocyanates such as isophorone diisocyanate (IPDI), cyclohexyl diisocyanate (CHDI), hydrogenated XDI (H₆XDI), and hydrogenated MDI (H₁₂MDI); and aliphatic isocyanates such as tetramethylene diisocyanate (TMDI), hexamethylene diisocyanate (HDI), lysine diisocyanate (LDI), and lysine triisocyanate (LTI). Examples of modifications thereof include urethane-modified isocyanates, dimers and trimers of isocyanates, carbodiimide-modified isocyanates, allophanate-modified isocyanates, biuret-modified isocyanates, urea-modified isocyanates, and isocyanate prepolymers. From the standpoint of production cost, it is preferred to use diphenylmethane diisocyanate (MDI).

As the antioxidant is used a high-molecular substance having a number-average molecular weight of from 400 to 5,000. In case where an antioxidant having a number-average molecular weight lower than 400 is used, the polyurethane foam obtained with this antioxidant may have a considerably increased value of VOC content, making it impossible to attain the VOC content value of 300 ppm or lower. In particular, the selection of an antioxidant based on number-average molecular weight considerably influences the value of VOC content as stated above. In the case of the polyether polyol, an antioxidant is used in synthesizing the polyol (synthesis antioxidant) and in sealing material production (antioxidant). Consequently, care should be taken because the influence of the antioxidants is greater than in the case of polyester polyols.

With respect to the kinds of antioxidants, the antioxidants are those widely usable in polyol synthesis (synthesis antioxidants) and in sealing material production (antioxidants). Examples thereof include hindered phenol compounds such as calcium diethylbis-3,5-bis(1,1-dimethylethyl)-4-hydroxyphenyl[methyl]phosphonate (number-average molecular weight: 695), 4,6-bis(octylthiomethyl)-o-cresol (number-average molecular weight: 424.7), ethylenebis(hydroxyethylene)bis[3-(5-tert-butyl-4-hydroxy-m-tolyl)propionate] (number-average molecular weight: 586.8), pentaerythritol tetrakis[3-(3,5-di-tert-butyl-4-hydroxyphenyl)propionate] (number-average molecular weight: 1,178), thiodiethylenebis[3-(3,5-di-tert-butyl-4-hydroxyphenyl)propionate] (number-average molecular weight: 643), octadecyl-3-(3,5-di-tert-butyl-4-hydroxyphenyl)propionate (number-average molecular weight: 531), and N,N'-hexane-1,6-diylbis[3-(3,5-di-tert-butyl-4-hydroxyphenylpropionamide)] (number-average molecular weight: 637). Besides such hindered phenol compounds, the antioxidants may be selected from the group consisting of phosphorus compound antioxidants, sulfur compound antioxidants, and hindered amine antioxidants.

The antiozonant is selected from the group consisting of aromatic secondary amine compounds, amine-ketone compounds, and peroxide decomposers. High-molecular compounds of these kinds each having the number-average molecular weight not lower than a certain level are used either alone or in combination of two or more thereof. Specific examples thereof include 4,4'-(α,α-dimethylbenzyl)diphenylamine, mixed diallyl-p-phenylenediamine, alkylated diphenylamines, e.g., octyldiphenylamine, and styrenated diphenylamines, wherein each amine has a number-average molecular weight of from 280 to 5,000. Examples of the amine-ketone compounds include poly(2,2,4-trimethyl-1,2-dihydroquinoline) and 6-ethoxy-1,2-dihydro-2,2,4-trimethylquinoline. Examples of the peroxide decomposers having a number-average molecular weight of from 280 to 5,000 include nickel dibutyldithiocarbamate and the zinc salt of 2-mercaptobenzimidazole.

Any one of those antiozonants may be used, or two or more thereof may be used in combination. The amount of the secondary amine compounds to be mixed may be from 1 to 25 parts by weight per 100 parts by weight of the polyol. In case where the amount thereof is smaller than 1 part by weight, ozone deterioration resistance does not reach a practical level. In case where the amount thereof exceeds 25 parts by weight, the polymerization/resin-forming reaction in obtaining a sealing material is inhibited and a normal foam cannot be obtained. The lower limit of the amount of the secondary amine compounds is preferably 3 parts by weight, more preferably 5 parts by weight.

Examples of other additives include ones in general use such as a catalyst, chain extender, flame retardant, crosslinking agent, blowing agent, and foam stabilizer. Examples of the catalyst include known organic acid/metallic tin catalysts and amine catalysts. Examples of the chain extender include polyamines such as diethyltoluenediamine and dimethylthiotoluenediamine. Examples of the flame retardant include trisdichloropropyl phosphate, trischloroethyl phosphate, dibromoneopentyl alcohol, and tribromoneopentyl alcohol. Examples of the crosslinking agent include known ones such as polyhydric alcohols such as ethylene glycol, propylene glycol, butanediol, glycerol, trimethylolpropane, pentaerythritol, and sorbitol, amines such as hexamethylenediamine, hydrazine, diethyltoluenediamine, and diethylenetriamine, and amino alcohols such as monoethanolamine, diethanolamine, and triethanolamine. Examples of the blowing agent include water, hydrocarbons such as cyclopentane, isopentane, and n-penane, hydrofluorocarbons such as nonafluorobutyl methyl ether, nonafluoroisobutyl methyl ether, nonafluorobutyl ethyl ether, nonafluoroisobutyl ethyl ether, pentafluoroethyl methyl ether, and heptafluoroisopropyl methyl ether, and liquefied carbonic acid gas. As the foam stabilizer can be used a substance in ordinary use in producing ordinary foams. Examples thereof include various foam stabilizers such as dimethylsiloxane compounds, polyether dimethylsiloxane compounds, and phenylmethylsiloxane compounds. Other additives including a colorant and a filler may be incorporated according to need.

For producing the sealing material of the invention, use can be made of the same foaming method as that usually employed for producing polyurethane foam slabstock from a two-component formulation. Specifically, a polyol is mixed beforehand with subcomponents including the given catalyst, antioxidant, and antiozonant. This mixture is mixed and stirred with an isocyanate just before pouring and foaming under atmospheric pressure to produce the slabstock. Thereafter, the slabstock which thus consists of a polyurethane foam, is subjected to pressing, profile processing, cutting or machining, etc. by a known method and thus processed/assembled into a desired shape of the sealing material.

The sealing material for air-conditioners of the invention is suitable for use as a sealing material for air-conditioners for vehicles. Besides being used in this application, the sealing material can be advantageously used as members which may emit VOCs, because not only duct doors produced from the polyurethane foam constituting the sealing material but also air seals for other application which have been produced from the foam bring about the same effects as the sealing material. Furthermore, since the polyurethane foam constituting the sealing material for air-conditioners of the invention has excellent ozone deterioration resistance and excellent wet-heat aging resistance, it can be advantageously used also as a sealing material for apparatus which print electronic latent images, e.g., copiers.

The following are Experiment Examples in which polyurethane foams as air-conditioner sealing materials according to the invention, which attain a low value of VOC content, were produced while changing conditions including the kinds of an antiozonant and antioxidant and the air-conditioner sealing materials obtained were examined for VOC content (ppm). It should be noted that the sealing material for air-conditioners of the invention is not construed as being limited to the following Experiment

### Examples.

### (Method of Determining VOC Content)

In the following Experiment Examples, each of test pieces weighing about 7 mg cut out of air-conditioner sealing materials obtained from respective combinations of material components was placed in a glass tube and examined by the VOC measurement method as provided for in "German Automobile Industry Association VDA278" using a thermal desorption apparatus (trade name, TDSA (including KAS, KAS-3+, and KAS-4); manufactured by Gestel). Specifically, each test piece was heated under the conditions of a temperature of 90°C and a period of 30 minutes and the gas emitted during this heating was analyzed with a gas chromatograph mass spectrometer (trade name, Gas Chromatograph Mass Spectrometer (No. 6890-5973N); manufactured by Agilent). The value of VOC content was calculated from the results. According to the provisions of the "German Automobile Industry Association VDA278", each test piece which had undergone the VOC content determination was subsequently heated under the conditions of a temperature of 120°C and a period of 1 hour and the gas emitted during this heating was likewise analyzed with the gas chromatograph mass spectrometer. Thus, the value of FOG content was also calculated.

### (Method of Measuring Air Permeability)

According to the ozone deterioration test as provided for in JIS K 6301, test pieces were exposed under the conditions of a temperature of 40°C and a concentration of 50 ppm. The test piece which had not undergone the exposure and the test pieces which had undergone the exposure for 500 hours and 750 hours, respectively, were examined for air permeability according to JIS L 1096.

### (Method of Determining Wet-Heat Aging Resistance)

A sheet having a thickness of 10 mm was cut out of each test piece, and exposed under the conditions of a temperature of 80°C and a relative humidity of 95%. The sheet was examined for tensile strength before the exposure and at each of 30, 60, 90, 120, and 1,500 hours after initiation of the exposure. The "retention of tensile strength" as provided for in JIS K 6301 was calculated. (EXPERIMENT 1) With Respect to Relationship between Kind of Antioxidant and VOC Content

A polyether polyol containing an antioxidant in a large amount was selected as a main material component for air-conditioner sealing materials. The number-average molecular weights of the synthesis antioxidant used and of the antioxidant to be used were changed to produce air-conditioner sealing materials according to Examples 1 and 2 and an air-conditioner sealing material according to Comparative Example 1. The formulations for these sealing materials are shown in Table 1 which will be given later. The sealing materials were examined for VOC content, etc. The material components used are described below.

The material components used are as follows.
- Polyether-polyester polyol A:
   Polyether polyol (trade name, GP3000; manufactured by Sanyo Chemical (OHV=56)) + polyester polyol (trade name, 3P56B; manufactured by Mitsui Takeda Chemicals (OHV=56)); synthesis antioxidant used in polyol synthesis (BHT (2,6-di-tert-butyl-4-methylphenol) (trade name, BHT Swanox; manufactured by Seiko Chemical (number-average molecular weight: 220))
- Polyether-polyester polyol B:
   Polyether polyol (trade name, GP3000; manufactured by Sanyo Chemical (OHV=56)) + polyester polyol (trade name, 3P56B; manufactured by Mitsui Takeda Chemicals (OHV=56)); synthesis antioxidant used in polyol synthesis (trade name, IRGANOX 245; manufactured by Ciba Specialty Chemicals (number-average molecular weight: 586.8))
- Polyester polyol A: Trade name, Kurapol F3010; manufactured by Kuraray (OHV=56), (polymerization initiator: adipic acid, number-average molecular weight: 146.2)
- Polyester polyol B: Substance (OHV=55) synthesized by condensing DEG (diethylene glycol) with TMP (trimethylolpropane) using a dimer acid (number-average molecular weight: 400 or higher) as polymerization initiator
- Isocyanate: Tolylene diisocyanate (trade name, TDI-80; manufactured by Sumitomo Bayer Urethane)
- Antioxidant A: BHT (2,6-di-tert-butyl-4-methylphenol), number-average molecular weight: 220
- Antioxidant B: Trade name, IRGANOX 245; manufactured by Ciba Specialty Chemicals (number-average molecular weight: 586.8)
- Antiozonant A: Trade name, Nocrac ODA; manufactured by Ouchi-Shinko Chemical Industrial (number-average molecular weight: 290.7)
- Amine catalyst: Triethylenediamine (trade name, LV-33; manufactured by Chukyo Yushi)
- Organic acid/metallic tin catalyst: Stannous octoate (trade name, MRH-110; manufactured by Johoku Chemical)
- Foam stabilizer: Silicone foam stabilizer (trade name, SH193; manufactured by Dow Corning Toray)
- Blowing agent: Water

**Table 1**

| Ingredient (pbw) | | Example 1 | Example 2 | Comparative Example 1 |
|---|---|---|---|---|
| Polyether-polyester polyol A | | | | 75/ |
| | Ether polyol | | | 30 |
| | Ester polyol | | | 45 |
| Polyether-polyester polyol B | | 75/ | 75/ | |
| | Ether polyol | 30 | 30 | |
| | Ester polyol | 45 | 45 | |
| Polyester polyol A | | 25 | | 25 |
| Polyester polyol B | | | 25 | |
| Isocyanate | | 55.1 | 55.1 | 55.1 |
| Antioxidant A | | - | - | 0.01 |
| Antioxidant B | | 0.01 | 0.01 | - |
| Antiozonant A | | 5.0 | 5.0 | 5.0 |
| Amine catalyst | | 0.3 | 0.3 | 0.3 |
| Organic acid/metallic tin catalyst | | 0.3 | 0.3 | 0.3 |
| Foam stabilizer | | 1.5 | 1.5 | 1.5 |
| Blowing agent | | 3.9 | 3.9 | 3.9 |
| VOC content (ppm) | | 2607 | 1660 | 3419 |
| FOG content (ppm) | | 3243 | 3048 | 3519 |
| Ozone deterioration resistance | Air permeability before exposure | 4.5 | 7.2 | 6.3 |
| | Air permeability after 500-hour exposure | 6.1 | 10.8 | 9.4 |
| | Air permeability after 750-hour exposure | 13.5 | 16.4 | 15.8 |
| Wet-heat aging resistance | Tensile strength before exposure (MPa/%) | 162/100 | 148/100 | 153/100 |
| | Tensile strength after 30-hour exposure (MPa/%) | 158/98 | 152/103 | 153/100 |
| | Tensile strength after 60-hour exposure (MPa/%) | 149/92 | 141/95 | 142/93 |
| | Tensile strength after 90-hour exposure (MPa/%) | 134/83 | 126/85 | 128/84 |
| | Tensile strength after 120-hour exposure (MPa/%) | 109/67 | 99/67 | 100/65 |
| | Tensile strength after 1500-hour exposure (MPa/%) | 78/47 | 75/51 | 72/47 |

In the table, the unit of air permeability is cm³/cm²/sec.

### (Results of Experiment 1)

The results of Experiment 1 are shown in Table 1. The following was ascertained from the results in Table 1. When an ether polyol synthesized with a synthesis antioxidant having a number-average molecular weight of 400 or higher was mixed with an ester polyol synthesized with a polymerization initiator having a number-average molecular weight of 400 or higher and a polyurethane foam was produced from this mixture using an antioxidant having a number-average molecular weight of 400 or higher, then this foam had a VOC content of about 1,500 ppm, which was about a half of the VOC content value exceeding 3,000 ppm in Comparative Example 1 (see Example 2). When only a synthesis antioxidant and an antioxidant each having a number-average molecular weight of 400 or higher were used, then the VOC content was about 2,500 ppm. Namely, a decrease of almost 1,000 ppm was ascertained (see Example 1). With respect to ozone deterioration resistance, which was evaluated in terms of air permeability, each polyurethane foam was on a satisfactory level even after 750-hour exposure. With respect to wet-heat aging resistance also, no influence by the different number-average molecular weights of the antioxidants, etc. was observed. For reference, the following Table 2 summarizes the degrees in which the material components shown in Table 1 influence VOC content, etc. In Table 2, the values of VOC content/FOG content attributable to the isocyanate, foam stabilizer, and blowing agent are collectively shown.

**Table 2**

| Ingredient (VOC content/ FOG content) content) | Example 1 | Example 2 | Compaative Example 1 |
|---|---|---|---|
| Polyether-polyester | | | 892/8 |
| polyol A | | | |
| Polyether-polyester | 0/0 | 0/0 | |
| polyol B | | | |
| Polyester polyol A | 704/242 | | 682/260 |
| Polyester polyol B | | 28/46 | |
| Antiozonant A | 1702/3001 | 1463/2686 | 1660/2883 |
| Antioxidant A | | | 4150/30 |
| Antioxidant B | 0/0 | 0/0 | |
| Isocyanate | 201/268 | 169/316 | 185/368 |
| Amine catalyst | | | |
| Organic acid/metallic tin catalyst | | | |
| Foam stabilizer | | | |
| Blowing agent | | | |
| Total | 2607/3243 | 1660/3048 | 7569/3549 |

In the table, VOC content and FOG content are shown in terms of ppm.

Table 2 shows the following. The general-purpose antioxidant accounts for about 1/3 the total, and the polymerization initiators for the polyester polyols account for about 1/5 the total. Furthermore, the antiozonant accounts for about a half of the total. It was thus ascertained that the value of VOC content can be considerably reduced by selecting high-molecular substances as the antioxidant and polymerization initiators.

### (EXPERIMENT 2) With Respect to Relationship between Kind of Antiozonant and VOC Content

The formulation in Example 2 in Experiment 1, in which a synthesis antioxidant and an antioxidant each having a number-average molecular weight of 400 or higher and a polymerization initiator for polyester polyol production having a number-average molecular weight of 400 or higher were selected, was modified as a reference by changing the kind of the antiozonant to be used. Thus, a sealing material according to Example 3 was produced. The formulation for the sealing material is shown in Table 3. The sealing material was examined for VOC content, etc. The results for Example 2 obtained in Experiment 1 are also shown in the table. The material components used are described below.

The material components used are as follows.
- Antiozonant B: Styrenated diphenylamine (trade name, Suteara LAS; manufactured by Seiko Chemical (number-average molecular weight: 308.3))
- The polyether-polyester polyol B, isocyanate, amine catalyst, organic acid/metallic tin catalyst, foam stabilizer, and blowing agent are the same as in Experiment 1.

**Table 3**

| Ingredient (pbw) | | Example 3 | Example 2 |
|---|---|---|---|
| Polyether-polyester polyol B | | 75/ | 75/ |
| | Ether polyol | 30 | 30 |
| | Ester polyol | 45 | 45 |
| Polyester polyol B | | 25 | 25 |
| Isocyanate | | 55.1 | 55.1 |
| Antioxidant B | | 0.01 | 0.01 |
| Antiozonant A | | | 5.0 |
| Antiozonant B | | 5.0 | |
| Amine catalyst | | 0.3 | 0.3 |
| Organotin catalyst | | 0.3 | 0.3 |
| Foam stabilizer | | 1.5 | 1.5 |
| Blowing agent | | 3.9 | 3.9 |
| VOC content (ppm) | | 275 | 1660 |
| FOG content (ppm) | | 1366 | 3048 |
| Ozone deterioration resistance | Air permeability before exposure | 5.6 | 7.2 |
| | Air permeability after 500-hour exposure | 10.8 | 10.8 |
| | Air permeability after 750-hour exposure | 16.4 | 16.4 |
| Wet-heat aging resistance | Tensile strength before exposure (MPa/%) | 145/100 | 148/100 |
| | Tensile strength after 30-hour exposure (MPa/%) | 146/101 | 152/103 |
| | Tensile strength after 60-hour exposure (MPa/%) | 139/92 | 141/95 |
| | Tensile strength after 90-hour exposure (MPa/%) | 126/87 | 126/85 |
| | Tensile strength after 120-hour exposure (MPa/%) | 99/68 | 99/67 |
| | Tensile strength after 1500-hour exposure (MPa/%) | 75/52 | 75/51 |

In the table, the unit of air permeability is cm³/cm²/sec.

### (Results of Experiment 2)

The results of Experiment 2 are shown in Table 3. It was ascertained from the results in Table 3 that the value of VOC content can be further reduced considerably by using an antiozonant having a number-average molecular weight of 280 or higher. For reference, the following Table 4 summarizes the degrees in which the material components shown in Table 3 influence VOC content, etc. With respect to ozone deterioration resistance, which was evaluated in terms of air permeability, and wet-heat aging resistance, the change in the number-average molecular weight of the antiozonant exerted almost no influence. In Table 4, the values of VOC content/FOG content attributable to the isocyanate, foam stabilizer, and blowing agent are collectively shown. It is noted that fluctuations in VOC content/FOG content up to about 300 ppm are within the range of errors.

**Table 4**

| Ingredient (VOC content/ FOG content) | Example 3 | Example 2 |
|---|---|---|
| Polyether-polyester polyol B | 0/0 | 0/0 |
| Polyester polyol B | 28/46 | 34/52 |
| Antioxidant B | 0/0 | 0/0 |
| Antiozonant A | | 1463/2686 |
| Antiozonant B | 53/1058 | |
| Isocyanate | 188/256 | 169/316 |
| Amine catalyst | | |
| Organic acid/metallic tin catalyst | | |
| Foam stabilizer | | |
| Blowing agent | | |
| Total | 275/1366 | 1660/3048 |

In the table, VOC content and FOG content are shown in terms of ppm.

It was ascertained from Table 4 and Table 2, which relates to Experiment 1, that the antiozonants are most causative of VOC emission.

As described above, the sealing material for air-conditioners according to the invention is constituted of a polyurethane foam produced from ingredients including additives and the like which are high-molecular compounds each having a number-average molecular weight not lower that a certain level, so as to take account of the ingredients constituting the foam and decomposition products which may emit during practical use of the foam. As a result, the amount of volatile organic compounds (VOCs) which emit during the use of the air-conditioner sealing material or the like obtained is reduced.

While the invention has been described in detail and with reference to specific embodiments thereof, it will be apparent to one skilled in the art that various changes and modifications can be made therein without departing from the spirit and scope thereof.

## Claims

1. A sealing material for air-conditioners which comprises a polyurethane foam produced from material components comprising at least one polyol, at least one isocyanate, from 1 to 25 parts by weight of an antiozonant per 100 parts by weight of the polyol, a catalyst, and an antioxidant,
wherein the antioxidant and an antioxidant used in synthesizing the polyol each have a number-average molecular weight of from 400 to 5,000, and are selected from hindered phenol compounds, phosphorus compound antioxidants, sulphur compound antioxidants and hindered amine antioxidants, and wherein the antiozonant has a number-average molecular weight of from 280 to 5,000 and is selected from the group consisting of aromatic secondary amine compounds, amine-ketone compounds and peroxide decomposers.

2. The sealing material for air-conditioners of Claim 1, which when examined by the VOC measurement method as provided for in German Automobile Industry Association VDA278, has a value of total VOC content of 300 ppm or lower.

3. The sealing material for air-conditioners of Claim 1, wherein the antioxidant and the antioxidant used in synthesizing the polyol each are a hindered phenol substance.

4. The sealing material for air-conditioners of Claim 1, wherein the polyol is a polyester polyol produced with a polymerisation initiator having a number-average molecular weight of from 400 to 1,000.

5. The sealing material for air-conditioners of Claim 4, wherein the polymerisation initiator is a dimer acid.

## Patentansprüche

1. Dichtungsmaterial für Klimaanlagen, das einen Polyurethanschaum umfasst, das hergestellt ist aus Materialkomponenten, die mindestens ein Polyol, mindestens ein Isocyanat, 1 bis 25 Gew.-Teile Antiozonans pro 100 Gew.-Teilen des Polyols, Katalysator und Antioxidationsmittel umfassen,
wobei das Antioxidationsmittel und ein Antioxidationsmittel, das bei der Synthese des Polyols verwendet wird, jeweils ein zahlengemitteltes Molekulargewicht von 400 bis 5.000 haben und ausgewählt sind aus gehinderten Phenolverbindungen, Phosphorverbindungs-Antioxidationsmitteln, Schwefelverbindungs-Antioxidationsmitteln und gehinderten Amin-Antioxidationsmitteln, und wobei das Antiozonans ein zahlengemitteltes Molekulargewicht von 280 bis 5.000 hat und ausgewählt ist aus der Gruppe, bestehend aus aromatischen sekundären Aminverbindungen, Amin-Keton-Verbindungen und Peroxidzersetzern.

2. Dichtungsmaterial für Klimaanlagen gemäss Anspruch 1, welches, wenn es mit der VOC-Messmethode geprüft wird, die in der Deutschen Automobilindustrie-Gesellschaft (German Automobile Industry Association) VDA278 vorgesehen ist, einen Wert des Gesamt-VOC-Gehalts von 300 ppm oder niedriger hat.

3. Dichtungsmaterial für Klimaanlagen gemäss Anspruch 1, in dem das Antioxidationsmittel und das Antioxidationsmittel, das bei der Synthese des Polyols verwendet wird, jeweils eine gehinderte Phenolsubstanz sind.

4. Dichtungsmaterial für Klimaanlagen gemäss Anspruch 1, in dem das Polyol ein Polyesterpolyol ist, das mit einem Polymerisationsstarter mit einem zahlengemittelten Molekulargewicht von 400 bis 1.000 hergestellt ist.

5. Dichtungsmaterial für Klimaanlagen gemäss Anspruch 4, in dem der Polymerisationsstarter eine Dimersäure ist.

## Revendications

1. Matériau d'étanchéité pour climatiseurs, qui comprend une mousse de polyuréthanne produite à partir de composants de matériau comprenant au moins un polyol, au moins un isocyanate, 1 à 25 parties en poids, d'un agent antiozone pour 100 parties en poids du polyol, un catalyseur et un antioxydant,
dans lequel l'antioxydant et un antioxydant utilisé dans la synthèse du polyol ont chacun un poids moléculaire moyen en nombre de 400 à 5000 et sont choisis parmi les composés phénoliques à empêchement stérique, les antioxydants du type composé phosphoré, les antioxydants du type composé sulfuré et les antioxydants du type amine à empêchement stérique, et dans lequel l'agent antiozone a un poids moléculaire moyen en nombre de 280 à 5000 et est choisi dans le groupe formé par les amines secondaires aromatiques, les amine-cétones et les agents décomposant les peroxydes.

2. Matériau d'étanchéité pour climatiseurs selon la revendication 1, qui, lorsqu'il est examiné par la méthode de mesure des COV telle que prévue dans VDA278 de l'Association de l'Industrie Automobile Allemande, a une teneur en COV totaux de 300 ppm ou moins.

3. Matériau d'étanchéité pour climatiseurs selon la revendication 1, dans lequel l'antioxydant et l'antioxydant utilisé dans la synthèse du polyol sont chacun une substance phénolique à empêchement stérique.

4. Matériau d'étanchéité pour climatiseurs selon la revendication 1, dans lequel le polyol est un polyester-polyol produit avec un initiateur de polymérisation ayant un poids moléculaire moyen en nombre de 400 à 1000.

5. Matériau d'étanchéité pour climatiseurs selon la revendication 4, dans lequel l'initiateur de polymérisation est un acide dimère.
